# FASCICULE DE BREVET EUROPEEN

(11) **EP 2 207 695 B1**
(45) Date de publication et mention de la délivrance du brevet: **16.08.2017**
(21) Numéro de dépôt: 08849916.5
(22) Date de dépôt: 10.10.2008
(51) Int. Cl.: B60L 7/16, B60L 1/00

(54) **ALIMENTATION ELECTRIQUE D'EQUIPEMENTS DE BORD D'UN VEHICULE AUTOMOBILE**
ENERGIEVERSORGUNG FÜR EIN BORDGERÄT EINES FAHRZEUGES
POWER SUPPLY FOR ONBOARD EQUIPMENT OF AN AUTOMOBILE

(30) Priorité: 12.11.2007 FR 0758958
(43) Date de publication de la demande: 21.07.2010
(73) Titulaire: Valeo Equipements Electriques Moteur, 94046 Créteil Cedex (FR)
(72) Inventeur: ARMIROLI, Paul, 94440 Marolles en Brie (FR)
(86) Numéro de dépôt international: PCT/FR2008/051839
(87) Numéro de publication internationale: WO 2009/063149

(56) Documents cités:
- DE-A1- 3 042 478
- JP-A- 9 252 546
- JP-A- 2004 328 988
- US-A- 5 552 681

## Description

La présente invention se rapporte au domaine automobile, et concerne l'alimentation de dispositifs électriques, plus spécifiquement dans le cas où ces véhicules sont équipés d'un système de freinage récupératif.

On connait de US 5,552,681, un mecanisme de freinage et d'entramement auxiliaire pour un moteur a combustion interne. On connait de DE3042478 A1, une méthode de récupération d'énergie à partir des gaz d'échappement d'un moteur à combustion interne.

L'invention porte sur l'utilisation d'un réseau d'alimentation électrique spécifique lié à la présence du système de freinage récupératif et a pour objet un procédé d'alimentation électrique qui est particulièrement bien adapté aux équipements dont le fonctionnement génère de forts appels de courant sur de brèves périodes de temps et dont l'alimentation électrique doit être réalisée avec de faibles temps de réponse de manière à autoriser le fonctionnement dynamique desdits équipements. Elle a également pour objet un système micro-hybride conçu pour la mise en oeuvre de ce procédé.

A titre d'exemple, dans un véhicule, les équipements de ce type demandant une alimentation électrique avec de faibles temps de réponse comprennent notamment :
- le turbo-compresseur assisté électriquement dit « e-turbo » ou le superchargeur de suralimentation dit « e-charger » en anglais, ces équipements demandant typiquement des puissances électriques de 1 à 2 kW pendant une durée de 1 à 2 s. Ces puissances et durées peuvent être plus élevées mais sans dépasser 3 kW et 3 s respectivement. Le temps de réponse de l'alimentation doit généralement être inférieur à quelques dizaines de millisecondes ;
- la direction assistée électrique consommant en régime transitoire des courants compris entre 25 et 100 A pendant des durées de 1 à 2 ms ;
- le groupe électropompe qui peut demander un courant d'environ 100 A pendant une durée de l'ordre de 200 ms ; et
- les soupapes à commande électromagnétique qui peuvent demander un courant d'environ 40 A pendant une durée de 1 à 140 ms.

Le réseau d'alimentation électrique classique d'un véhicule automobile comporte usuellement deux sources de courant : la batterie (couramment une batterie au plomb), et l'alternateur. Or, ces sources sont, l'une comme l'autre, peu adaptées à l'alimentation avec de faibles temps de réponse d'équipements électriques pouvant, par ailleurs, générer de forts appels de courant ou de tension.

En effet, le temps de réponse d'un alternateur classique, de l'ordre d'une centaine de millisecondes, est trop élevé pour répondre à un tel besoin.

La batterie au plomb est également mal adaptée à la fourniture cyclique, avec de faibles temps de réponse, de pics de courant élevé, notamment en raison du fait que les cycles de décharge qui lui sont alors imposés contribuent à accélérer son vieillissement. D'autres types de batterie pourraient répondre à ce besoin, mais elles sont d'un coût trop élevé pour que l'on puisse envisager leur mise en place sur un véhicule automobile produit en grande série.

La présente invention vise à remédier efficacement aux inconvénients précités en proposant une association selon la revendication 1.

Selon une première de ses caractéristiques, l'invention propose, dans les véhicules équipés de systèmes micro-hybrides pouvant fonctionner en mode de freinage récupératif, d'utiliser un réseau d'alimentation électrique spécifique associé à ce mode de fonctionnement pour alimenter, avec des temps de réponse courts, des équipements du véhicule pouvant par ailleurs générer des appels de courant relativement importants en fonctionnement dynamique.

De manière connue, les systèmes micro-hybrides, par exemple à alterno-démarreur, permettent de réduire la consommation en carburant d'un véhicule et peuvent fonctionner en mode de freinage récupératif. Ces systèmes comportent généralement une machine électrique tournante réversible, un convertisseur alternatif-continu réversible, une unité auxiliaire de stockage d'énergie, ainsi qu'un convertisseur continu-continu réversible, et un dispositif de gestion électronique de l'ensemble. De préférence, l'unité auxiliaire de stockage d'énergie est constituée de l'association de plusieurs cellules capacitives élémentaires de très grande capacité, également désignées par le terme de « supercondensateurs ». L'unité auxiliaire de stockage d'énergie et le convertisseur continu-continu réversible forment le "pack de puissance" du système micro-hybride.

De manière également connue, l'énergie électrique récupérée au moyen de la machine électrique tournante, par exemple lorsque l'ensemble fonctionne en mode de freinage récupératif, est stockée dans l'unité auxiliaire de stockage d'énergie. Le système micro-hybride à freinage récupératif procure un réseau bi-tension capable de fournir, d'une part, une tension continue flottante obtenue aux bornes de l'unité auxiliaire de stockage d'énergie, et d'autre part, une tension continue basse aux bornes de la batterie au plomb. La tension continue flottante dite « tension 14+X » est supérieure à la tension aux bornes de ladite batterie au plomb qui alimente de manière classique le réseau d'alimentation électrique 12V.

Les éléments capacitifs de l'unité auxiliaire de stockage d'énergie autorise la délivrance de courants élevés sur des périodes courtes, et rend également possible la fourniture de courant avec un temps de réponse très bref, compatible avec l'alimentation d'équipements électriques spécifiques du véhicule.

Selon un mode de réalisation préféré de l'invention, cette tension "14+X" est plus particulièrement utilisée pour alimenter un moteur électrique d'assistance d'un turbocompresseur ou un superchargeur de suralimentation du moteur thermique du véhicule.

En effet, de manière connue, un turbocompresseur comporte classiquement une turbine entraînée en rotation par les gaz chauds issus de la combustion dans le moteur, turbine qui entraîne à son tour un compresseur monté sur le même arbre. L'air comprimé par ce compresseur est ensuite injecté dans les cylindres du moteur pour améliorer la combustion au sein de celui-ci.

L'optimisation du fonctionnement d'un turbocompresseur passe par la diminution de son temps de réponse et par l'augmentation de sa plage de fonctionnement (hauts et bas régimes du moteur). A côté des solutions mécaniques consistant, par exemple, à réaliser une turbine à géométrie variable ou à communiquer un moment giratoire au fluide avant son entrée dans le compresseur, on connaît des solutions d'assistance électrique dans lesquelles l'insertion, entre la turbine et le compresseur, d'un moteur électrique approprié, permet d'augmenter la plage de performances optimales d'un tel turbocompresseur : on désigne alors un tel turbocompresseur par le terme de "turbocompresseur assisté électriquement".

Les moteurs électriques permettant cette assistance nécessitent toutefois une alimentation pouvant délivrer de manière cyclique de forts courants et avec un temps de réponse réduit au minimum de manière à autoriser un fonctionnement dynamique comportant des transitoires qui demandent une bonne réponse de l'alimentation électrique pour des fréquences élevées. Le réseau de tension "14+X" précité se prête donc bien à une telle utilisation.

Plus précisément, l'alimentation du moteur électrique d'assistance d'un turbocompresseur est une alimentation par impulsions, généralement obtenue au moyen d'un hacheur lui-même alimenté par une tension continue du véhicule.

Selon une autre caractéristique de l'invention, ce hacheur est intégré au pack de puissance du réseau de tension "14+X" précédemment défini, et directement alimenté par la tension continue flottante "14+X".

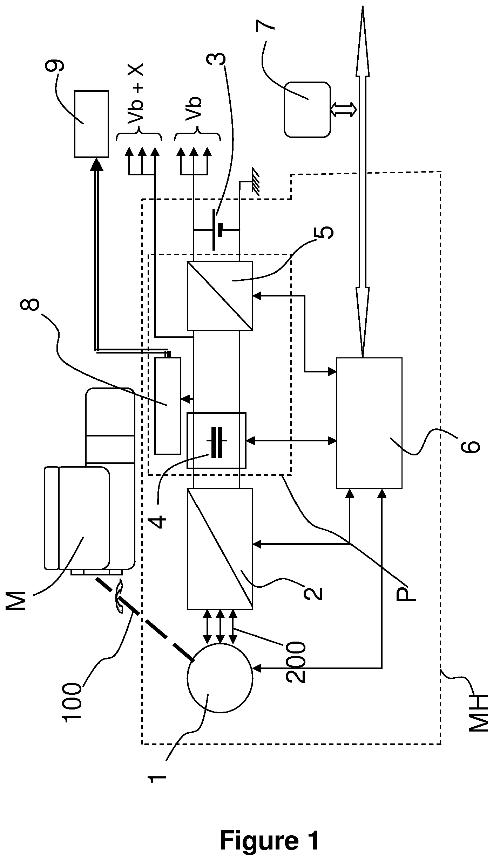

L'invention sera maintenant plus précisément décrite au travers d'un exemple préféré de réalisation et en référence à la figure 1 qui présente un schéma de principe d'un de ses modes de réalisation préférés.

Cette figure présente schématiquement les différents éléments d'un système micro-hybride MH pouvant fonctionner en mode de freinage récupératif.

Le système micro-hybride MH comporte une machine électrique tournante réversible 1 couplée mécaniquement (couplage représenté schématiquement par un trait discontinu 100 sur la figure 1) au moteur thermique M du véhicule. La machine électrique tournante réversible 1, ou alterno-démarreur, est reliée à un convertisseur alternatif-continu réversible 2 (liaisons 200).

Lorsque la machine tournante 1 fonctionne en mode alternateur, le convertisseur 2 transforme les tensions triphasées qu'elle fournit en une tension continue redressée à partir de laquelle sont chargées des supercondensateurs de l'unité auxiliaire de stockage d'énergie 4 et la batterie au plomb 3.

Lorsque la machine tournante 1 fonctionne en mode démarreur, elle est alors alimentée par des tensions triphasées alternatives générées par le convertisseur alternatif-continu réversible 2 à partir de la tension continue présente aux bornes de l'unité auxiliaire de stockage d'énergie 4.

Un convertisseur continu-continu réversible 5 permet, à partir de la tension continue redressée fournie par le convertisseur alternatif-continu 2 lorsque la machine électrique tournante 1 fonctionne en mode alternateur, ainsi qu'à partir de la tension présente aux bornes de l'unité auxiliaire de stockage d'énergie 4, d'obtenir une tension continue Vb qui est utilisée pour charger la batterie 3 du véhicule. La tension Vb aux bornes de cette batterie est utilisée pour alimenter un certain nombre d'équipements électriques de bord du véhicule.

L'unité auxiliaire de stockage d'énergie 4 et le convertisseur continu-continu réversible 5 forment le pack de puissance P du système micro-hybride MH.

Par ailleurs, l'énergie emmagasinée dans l'unité auxiliaire de stockage d'énergie 4 peut être utilisée pour alimenter le réseau à tension continue flottante dit réseau de tension Vb+X. Cette tension continue flottante est supérieure à la tension de batterie Vb. De manière courante, la tension de charge de la batterie étant habituellement de l'ordre de 14 Volts, le réseau de tension Vb+X est également appelé "réseau 14+X" par les hommes du métier, ainsi que cela a été mentionné plus haut. Il est à noter qu'une telle dénomination n'est bien sûr en rien limitative de la tension du réseau d'alimentation de la batterie au plomb, ni de celle du réseau de tension continue flottante associé au système micro-hybride MH à freinage récupératif.

Une unité électronique 6 assure, en liaison avec une unité électronique 7 de contrôle et de commande du fonctionnement du moteur, la gestion de l'ensemble des éléments du système micro-hybride MH.

Selon l'invention, la tension Vb+X est utilisée pour des équipements spécifiques du véhicule qui nécessitent, pour leur fonctionnement dynamique, la fourniture, avec de faibles temps de réponse, des courants élevés sur des courtes périodes de temps.

Selon un mode de réalisation préféré de l'invention, schématisé par la figure 1, la tension Vb+X est utilisée pour alimenter le hacheur 8 à partir duquel est alimenté, en mode d'impulsions de puissance, le moteur électrique d'assistance d'un turbocompresseur schématiquement représenté en 9 sur la figure.

En effet, ainsi qu'il a été précisé plus haut, les supercondensateurs de l'unité auxiliaire de stockage 4 sont bien adaptés à la fourniture de pics de courant avec de faibles temps de réponse.

Selon une autre caractéristique de l'invention, illustrée dans le mode de réalisation représenté par la figure 1, le hacheur 8 à partir duquel est alimenté le moteur électrique d'assistance du turbocompresseur 9 est intégré au pack de puissance P comportant également l'unité auxiliaire de stockage 4 et le convertisseur continu-continu 5. Ceci permet notamment d'améliorer la compacité du système.

L'invention conduit ainsi à disposer d'une source d'alimentation à faible temps de réponse et compatible par ailleurs avec la fourniture de courants élevés sur de brèves périodes de temps, cette source d'alimentation fonctionnant grâce au mode de freinage récupératif, c'est-à-dire sans induire la nécessité d'implanter le moindre composant supplémentaire dans le véhicule équipé du système micro-hybride. Ceci permet de limiter la consommation globale du véhicule, tout en disposant, dans le mode de réalisation préféré de l'invention schématisé sur la figure 1, d'un turbocompresseur dont les performances peuvent être optimisées grâce à l'assistance électrique, conduisant ainsi à une optimisation supplémentaire de la consommation dudit véhicule.

Il est toutefois à noter que l'invention ne saurait se limiter aux modes de réalisation décrits et qu'elle s'étend en particulier à tout moyen équivalent et toute combinaison techniquement opérante de tels moyens. En particulier, l'invention n'est pas limitée à l'utilisation du réseau de tension "14+X" associé au système micro-hybride MH pour l'alimentation du turbocompresseur 9 ou un superchargeur électrique de suralimentation. Elle peut être mise en oeuvre pour l'alimentation de tout équipement électrique du véhicule nécessitant une source d'alimentation à faible temps de réponse pour son fonctionnement dynamique : à titre d'exemples non limitatifs, l'invention peut ainsi également être mise en oeuvre pour l'alimentation de dispositifs de direction assistée, de soupapes à commande électromagnétique et de groupes électropompes assurant la circulation de fluides au sein du véhicule automobile.

## Revendications

1. Association dans un véhicule automobile d'un système micro-hybride et d'un équipement de bord du véhicule, ledit système micro-hybride pouvant fonctionner en mode de freinage récupératif et comportant au moins une machine électrique tournante réversible (1), un convertisseur alternatif-continu (2), une unité auxiliaire de stockage d'énergie (4) formée de supercondensateurs (4) et un convertisseur continu-continu (5), ledit système micro-hybride étant apte à alimenter, notamment lors des phases de freinage récupératif du véhicule automobile qu'il équipe, ladite unité auxiliaire de stockage d'énergie (4) de manière à générer, dans ledit véhicule, un réseau bi-tension présentant une tension basse (Vb) d'alimentation d'une batterie (3) dudit véhicule et, aux bornes de ladite unité auxiliaire de stockage d'énergie (4), une tension flottante (Vb+X) supérieure à cette tension basse, **caractérisé en ce que** ledit équipement de bord est un équipement de suralimentation (9) associé au moteur thermique dudit véhicule automobile, ledit équipement étant alimenté en mode impulsionnel par un hacheur (8) qui est alimenté par ladite tension flotante, ledit équipement étant susceptible de consommer pour son fonctionnement dynamique des courants élevés sur de brèves périodes de temps, et **en ce que** ledit équipement est alimenté avec de faibles temps de réponse par ladite tension flottante (Vb+X).

2. Association selon la revendication 1, **caractérisé en ce que** ledit équipement de suralimentation (9) est un turbocompresseur (9) assisté électriquement

3. Association selon la revendication 1, **caractérisé en ce que** ledit équipement de suralimentation (9) est un superchargeur.

4. Association selon l'une quelconque des revendications 1 à 3, **caractérisé en ce que** lesdits unité auxiliaire de stockage d'énergie (4) et convertisseur continu-continu (5) forment un pack de puissance (P) dudit système micro-hybride dans lequel est incorporé ledit hacheur (8).

## Patentansprüche

1. Verbindung, in einem Kraftfahrzeug, eines Mikrohybridsystems und eines Bordgerätes des Fahrzeugs, wobei das Mikrohybridsystem in einer Betriebsart des rekuperativen Bremsens arbeiten kann und wenigstens eine reversible, rotierende elektrische Maschine (1), einen Wechselstrom-Gleichstrom-Umrichter (2), eine Hilfseinheit zur Energiespeicherung (4), die von Superkondensatoren (4) gebildet wird, und einen Gleichstrom-Gleichstrom-Umformer (5) umfasst, wobei das Mikrohybridsystem geeignet ist, insbesondere während Phasen des rekuperativen Bremsens des Kraftfahrzeugs, das mit ihm ausgerüstet ist, die Hilfseinheit zur Energiespeicherung (4) zu speisen, derart, dass in dem Fahrzeug ein Zweispannungsnetz erzeugt wird, das eine niedrige Spannung (Vb) zur Speisung einer Batterie (3) des Fahrzeugs und, an den Klemmen der Hilfseinheit zur Energiespeicherung (4), eine schwebende Spannung (Vb+X), die höher als diese niedrige Spannung ist, aufweist, **dadurch gekennzeichnet, dass** das Bordgerät ein Aufladegerät (9) ist, das dem Verbrennungsmotor des Kraftfahrzeugs zugeordnet ist, wobei dieses Gerät im Impulsbetrieb von einem Zerhacker (8) gespeist wird, welcher von der schwebenden Spannung gespeist wird, wobei das Gerät geeignet ist, für seine dynamische Funktion hohe Ströme über kurze Zeiträume zu verbrauchen, und dadurch, dass das Gerät von der schwebenden Spannung (Vb+X) mit geringen Reaktionszeiten gespeist wird.

2. Verbindung nach Anspruch 1, **dadurch gekennzeichnet, dass** das Aufladegerät (9) ein elektrisch unterstützter Turbokompressor (9) ist.

3. Verbindung nach Anspruch 1, **dadurch gekennzeichnet, dass** das Aufladegerät (9) ein Lader ist.

4. Verbindung nach einem der Ansprüche 1 bis 3, **dadurch gekennzeichnet, dass** die Hilfseinheit zur Energiespeicherung (4) und der Gleichstrom-Gleichstrom-Umformer (5) ein Leistungspaket (P) des Mikrohybridsystems bilden, in welchen der Zerhacker (8) integriert ist.

## Claims

1. Association, in a motor vehicle, of a micro hybrid system and an onboard equipment item of the vehicle, said micro hybrid system being able to operate in regenerative braking mode and comprising at least one reversible rotating electric machine (1), an AC-DC converter (2), an auxiliary energy storage unit (4) formed by super capacitors (4) and a DC-DC converter (5), said micro hybrid system being capable of powering, notably in regenerative braking phases of the motor vehicle with which it is equipped, said auxiliary energy storage unit (4) so as to generate, in said vehicle, a two-voltage network having a low voltage (Vb) supplying a battery (3) of said vehicle and, at the terminals of said auxiliary energy storage unit (4), a floating voltage (Vb+X) higher than this low voltage, **characterized in that** said onboard equipment item is a supercharging equipment item (9) associated with the heat engine of said motor vehicle, said equipment item being powered in pulse mode by a chopper (8) which is powered by said floating voltage, said equipment item being likely to consume, for its dynamic operation, high currents over brief periods of time, and **in that** said equipment item is powered with low response time by said floating voltage (Vb+X).

2. Association according to Claim 1, **characterized in that** said supercharging equipment item (9) is an electrically assisted turbocompressor (9).

3. Association according to Claim 1, **characterized in that** said supercharging equipment item (9) is a supercharger.

4. Association according to any one of Claims 1 to 3, **characterized in that** said auxiliary energy storage unit (4) and DC-DC converter (5) form a power pack (P) of said micro hybrid system in which said chopper (8) is incorporated.
